# NEW EUROPEAN PATENT SPECIFICATION

(11) **EP 2 801 680 B3**
(45) Date of publication of this specification: **10.07.2024**
(45) Mention of the grant of the patent: 30.03.2016
(21) Application number: 14166749.3
(22) Date of filing: 30.04.2014
(51) Int. Cl.: E04F 19/08, H02G 3/38, E05C 19/16, H02G 3/12, H02G 3/14

(54) **Device and kit for closing service boxes**
Vorrichtung und Bausatz zum Schliessen von Anschlusskästen
Dispositif et kit de construction pour la fermeture de boîtes de service

(30) Priority: 08.05.2013 IT GE20130047
(43) Date of publication of application: 12.11.2014
(73) Proprietor: Pucci Saoro, S.R.L., 50050 Capraia e Limite (FI) (IT)
(72) Inventor: Pucci, Luca, 50050 Capraia e Limite (FI) (IT); Pucci, Andrea, 50050 Capraia e Limite (FI) (IT)
(74) Representative: Karaghiosoff, Giorgio Alessandro

(56) References cited:
- WO-A1-2011/095275
- DE-A1- 3 544 847

## Description

The present invention relates to a device for closing electrical or plumbing service boxes arranged in houses and/or buildings for the purpose of accommodating electric cables, pipes or the like.

The device comprises a box-like body to be embedded in the thickness of the wall, such that the electrical box may be created thereby, and closure means adapted to be fixed to the box-like body.

Furthermore, the box-like body has at least one open side on a plane substantially parallel to the wall, the closure means being fixed at or along the perimeter edge that delimits the open side of the box-like body.

The device of the present invention may be used to cover air blower units, electrical appliances or the like, both indoors and outdoors.

Plumbing fixtures and electrical and heating/air conditioning systems have an increasingly critical role in modern buildings, and their proper design and location is of utmost importance for the construction of appropriate buildings or apartments.

Furthermore, as modern appliances, such as washing machines, dishwashers, air conditioners and other similar electrical appliances have been increasingly used, the amount and complexity of fixtures have considerably increased, thereby increasing the amount and complexity of electrical boxes, to such an extent that service spaces are actually required in houses, for maintenance and inspection of such fixtures.

As a rule, electrical or plumbing service boxes or the like are closed by panels that are fastened to the edges of the box-like bodies by screws or hinges. DE 3 544 847 discloses such a service box closed by a panel according to the preamble of claim 1.

Nevertheless, these arrangements involve both functional and aesthetic drawbacks.

During maintenance, cleaning and inspection of fixtures in electrical boxes, hinged panels are particularly bulky and does not facilitate the required steps.

Screwed panels also have drawbacks because the above mentioned steps may be only carried out by first unscrewing screws, which often get lost during screwing/unscrewing.

Furthermore, screws tend to become worn, rust corrodes either the threads or the head of the screws and makes them difficult to use.

In addition to the above described functional drawbacks, there are as many drawbacks in terms of aesthetical value.

Irrespective of whether panels are hinged or screwed, the means for fastening them to the edges of the electrical boxes are exposed to the view, thereby spoiling the appearance of the wall in which the box-like body is inserted, with an effect that is further worsened if electrical boxes have a large size. US 2011/056743 discloses a mounting tray to be secured to an electrical box. The mounting tray is shaped like a frame. Two perforated tabs extends towards the center of the mounting tray departing each from the inside edge of respectively one of two opposed sides of the mounting tray. The mounting tray is secured to the electrical box by means of screws passing the perforated tabs and screwed into seats provided at corresponding sites of the lateral walls of the electrical box. Thus the mounting tray is secured at only two points to the electrical box.

Document KR 2009/0007645 U discloses a cable box which is embedded in a floor and comprises a box like main body destined to be embedded in the floor and a closing frame. The main body having lateral walls and at the inside of the lateral walls at the corners and at the centre of the longest sides there are provided internal thickenings with fastening holes for receiving fastening screws securing the said frame by passing through holes in the said frame coincident with the said fastening holes. Also in this case the frame is secured to the box at only some points of the perimeter edge of the box. Along the perimeter of the frame a slot is provided in which a a protrusion of the upper edges of the lateral walls of the main body fits. The said slot and protrusion being destined to form sealing abutments optionally with the interposition of a seal. The said slot and the said protrusion being shaped so that they do not show any retention mean for securing the frame to the main body but have only the function of providing a sealing between the said main body and the said frame.

Therefore, there is yet an unfulfilled need for a device for closing electrical or plumbing service boxes in houses and/or buildings, that can obviate the above described drawbacks typically associated with prior art devices.

The invention fulfills the above objects by providing a device for closing electrical or plumbing service boxes in houses and/or buildings as described hereinbefore, in which the closure means consist of a frame, that is designed to be removably attached to the box-like body and a closing panel and comprising the combination of features of claim 1.

The frame has a radially inward area of a given width along at least one of its sides, which is adapted to form a front abutment edge for the panel, having fastener members for removable fixation thereof.

As better explained below, the fastener members allow full removal of the panel, for easier maintenance by an operator, and are hidden to the view, as they are interposed between the panel and the front abutment edge.

According to a possible embodiment, the frame consists of a peripheral flange embedded in the wall, which has the front abutment edge on at least one of its sides.

The peripheral flange is connected to the front abutment edge via a connecting rim, thereby forming a step connection area having a given thickness.

The provision of a step connection allows the peripheral flange to be embedded in the wall, particularly in the plaster, if the wall is made of bricks or in boards, if the wall is made of plasterboard.

This is a critical feature, as it provides a rim for accommodating a finishing layer, a board or plaster, such that the closing plane is level with the wall, i.e. flush therewith.

In a preferred embodiment, the fastening members are magnetic fastener means, consisting of a first magnetic element located on the panel, which cooperates with a second magnetic element located on the front abutment edge.

The use of magnetic means as fastening members first avoids the need for fastener members having functional drawbacks, such as hinges, screws or the like.

Furthermore, the use of magnetic means in combination with the above described characteristics of the device of the present invention affords easy assembly and adaptation to any electrical service box or service space, in either brick walls or plasterboard structures.

This easy assembly feature combines with low fabrication costs, as well as with the possibility of changing and customizing the panel according to construction needs.

Any fastener member may be envisaged for fixing the panel to the frame, without limitation to the inventive principle and to the advantages of the device of the present invention.

The magnetic means may be replaced, for instance, by Velcro^{®} elements or the like, or double-sided adhesive tapes, or any other element that can reversibly secure the panel to the frame.

The above described device also provides advantages in terms of aesthetics as the fastening arrangement is hidden to the view because, once the panel has been mounted, the magnetic elements remain inside, thereby imparting a clean, seamless look to the panel and frame, with no hinge or other fastener element visible from outside.

Furthermore, in this configuration the panel is held flush with the wall and does not project out of the finishing plane.

A further advantage of this embodiment is that the device of the present invention also fits box-like bodies placed on the ground, near the ceiling or at the sidewall with one edge contacting the floor or ceiling or a sidewall.

With ground-mounted rectangular electrical boxes, the device of the present invention may have a rectangular frame with three sides only, one having the second magnetic element cooperating with the first magnetic element placed on the panel: with an adequate magnetic force the panel will be fixed to the frame, without having to form a closed rectangular frame.

This arrangement is not included in prior art devices and is a particularly advantageous aspect of the device of the present invention.

In a variant embodiment, each side of the peripheral flange has a front abutment edge, such that each front abutment edge is connected to a corresponding side of the peripheral flange through a corresponding connecting rim, to form a step having a given thicknesses.

According to an improvement of the device of the present invention the connecting rim extends substantially perpendicular to the wall beyond the plane of the front abutment edge, thereby forming a connecting tab between the peripheral flange and the front abutment edge.

Therefore, the connecting tab projects out of the plane of the front abutment edge by a length that corresponds to or is slightly greater than the thickness of the panel.

The presence of a connecting tab on all or part of the frame sides forms a housing for the panel, which advantageously supports the panel and stabilizes it in the position in which it closes the box-like body.

This is not the only advantage afforded by the presence of the connecting tab because, as more clearly shown by the description of a few exemplary embodiments, the tab allows easier removal of the panel.

In the light of the above described characteristics, the panel will be removed by simply exerting a pressure on a predetermined point of the panel, which exceeds the magnetic force and allows the panel to be pulled out of the frame.

The point at which the smallest force is required is the point farthest from the area in which the magnetic means are fixed, i.e. at one of the connecting tabs, whereby the panel will pivot about an axis at the connecting tab during removal.

Therefore, the connecting tab will promote the pivotal movement of the panel and also support the panel as it is being removed to prevent it from falling.

As clearly shown by the exemplary embodiments that will be described hereinbelow, the presence of the magnetic elements will form a thickness between the panel and the front edge, such thickness allowing the panel to pivot regardless of the shape of the edges of the panel

As the panel is being pivoted for removal, the connecting tab will support the panel to prevent it from falling and to allow it to be easily held by a user, particularly at the panel edge farthest from the pivoting axis.

The presence of the connecting tab is a particularly advantageous characteristic when compared with prior art devices for closing electrical boxes, where panel removal is always problematic and there is no solution that might ensure good results in terms of easy removal and aesthetics of the device.

The connecting tab affords an aesthetically appealing flush design, i.e. allows easy removal of the panel even with it is mounted flush with the wall.

This result cannot be achieved in prior art devices, for example DE 3544847 discloses a flush-mounted panel that can be only removed by using suction cup means or the like.

The frame may be made of any material but according to an improvement the frame is made of one piece from a metal material.

This characteristic is particularly advantageous because, as disclosed above, the present invention also relates to a kit for closing electrical service boxes in houses and/or buildings and the frame is one of the parts of the kit.

Furthermore, the use of a metal material, which provides advantages in terms of production, also allows the frame to incorporate the second magnetic element that cooperates with the first magnetic element on the panel, for attachment thereof to the frame.

In one embodiment, removable hinge means may be provided for removably hinging the panel to the frame, such that the panel may also pivot about an axis parallel to said wall.

This characteristic is particularly advantageous with large electrical or plumbing service boxes, which also have large panels, because such hinge means hold the panel in the closed position without requiring a high magnetic force and support the panel as it is being removed.

For example, the hinge means may consist of a fastener element located on the panel, which cooperates with a corresponding fastener seat in a groove formed on the front abutment edge.

Considering the advantageous features of the present invention and its ability to fit any electrical or plumbing service box, there is also disclosed a kit for closing electrical service boxes arranged in houses and/or buildings for accommodation of electrical cables, pipes or the like, in which the electrical service boxes consist of a box-like body to be embedded in the thickness of the wall, which has at least one open side on a plane substantially parallel to the wall.

The kit comprises closure means that are designed to be fixed to the box-like body and fastener members for removably fixing them to the box-like body.

The closure means are preferably fixed at or along the perimeter edge that delimits the open side of the box-like body.

The closure means have one or more of the above described characteristics, such that the kit of the present invention may fit any electrical service box and be easily assembled, and also have low manufacturing costs.

As a result, the kit of the present invention is adapted to be mounted to electrical or plumbing service boxes of any shape, i.e. having either regular or irregular shapes.

This is a particularly advantageous aspect because the box is often already installed, and hence what is needed is simply to form a frame with the same shape as the box, to embed the frame in the wall, and to attach the panel thereto.

Therefore, the kit of the present invention features all the above described advantageous characteristics, in both aesthetic and functional terms.

Thus, as described above concerning the device, the kit of the present invention also affords advantages in terms of aesthetics, as it allows electrical service boxes to be covered in an aesthetically pleasing and customizable manner, while providing as clean and seamless a design as possible, especially with no hinges, screws or the like, as required in the prior art for attachment to electrical service boxes.

These and other features and advantages of the present invention will appear more clearly from the following description of a few embodiments, illustrated in the annexed drawings, in which:
Fig. 1 shows a view of the device of the present invention according to a possible embodiment;
Fig. 2 shows a view of the device of the present invention with the panel removed;
Fig. 3 shows a view of the panel, particularly the back wall of the panel;
Fig. 4 shows a detail of the frame of the device of the present invention;
Figs. 5 and 6 show two views of the device of the present invention;
Figs. 7, 8 and 9 show details of the hinge means of the device of the present invention;
Figs. 10 and 11 show two details of the fastener members of the kit of the present invention;
Figs. 12a to 12n show various embodiments of the profile of a section of the frame of the device of the present invention;
Figs. 13a and 13b show two different embodiments of the frame of the device of the present invention.

It shall be understood that the variant embodiments as shown in the accompanying drawings are only proposed by way of illustration and for a better understanding of the principles and advantages of the device of the present invention, and shall not be intended to limit the guiding principle of the present patent application, i.e. to provide a device for closing electrical service boxes in houses and/or buildings, that can be easily mounted and adapted to any type of electrical service box, and can afford both functional and aesthetic advantages, as described above when setting forth the advantages of the various characteristics of the device of the present invention.

The figures show a device for closing electrical service boxes arranged in houses and/or buildings with the purpose of accommodating electrical cables, pipes or the like, which comprises a box-like body 1 to be embedded in the thickness of the wall and closure means adapted to be fixed to the box-like body 1.

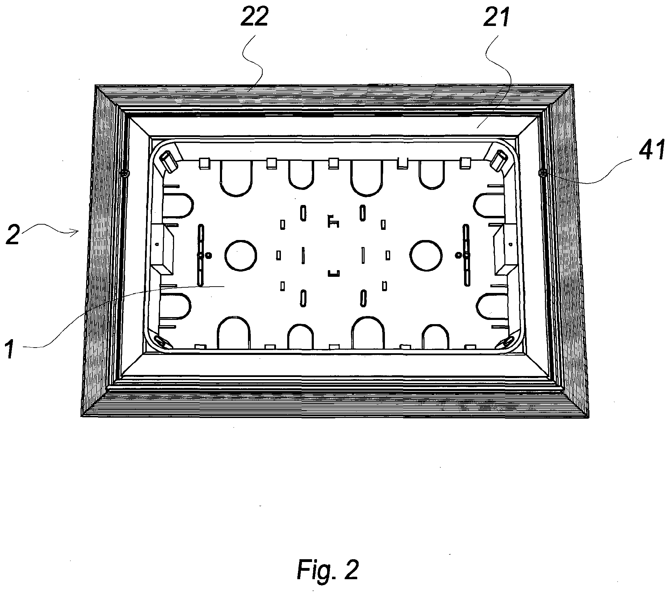

The box-like body 1 has an open side along a plane substantially parallel to the wall, and the closure means are fixed at or along the perimeter edge that delimits the open side of the box-like body 1, as particularly shown in Figure 2.

The closure means consist of a frame 2 that can be removably fixed to the box-like body 1 and a closure panel 3.

The frame 2 has a radially inward area of a given width along at least one of its sides, which is adapted to form a front abutment edge 21 for the panel 3, having fastener members for removable fixation of the panel 3.

Particularly, the frame consists of a peripheral flange 22 having the front abutment edge 21 on at least one of its sides.

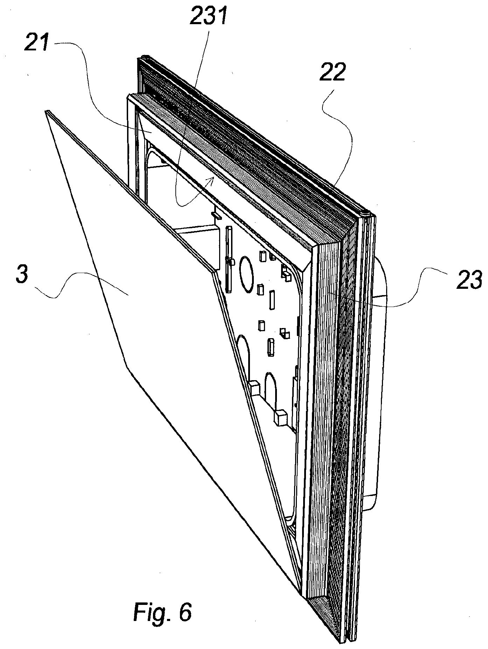

Furthermore, the peripheral flange 22 is connected to the front abutment edge 21 via a connecting rim 23, thereby forming a step connection area having a given thickness, as clearly shown in Figure 6 .

The device of the present invention is mounted in a house wall by embedding the peripheral flange 22 in the wall, with the step connection having a length that is equal to the thickness of the plaster, in case of brick walls, or to the thickness of boards, in case of plasterboard walls.

Particularly, the connecting rim 23 has such a length as to allow the panel to be flush with the wall, i.e. prevent it from projecting out of the plane of the wall, when it is closed, i.e. when it covers the open side of the box-like body 1.

Preferably, the fastening members are magnetic fastener means, consisting of a first magnetic element 31 on the panel 3, which cooperates with a second magnetic element on the front abutment edge 21.

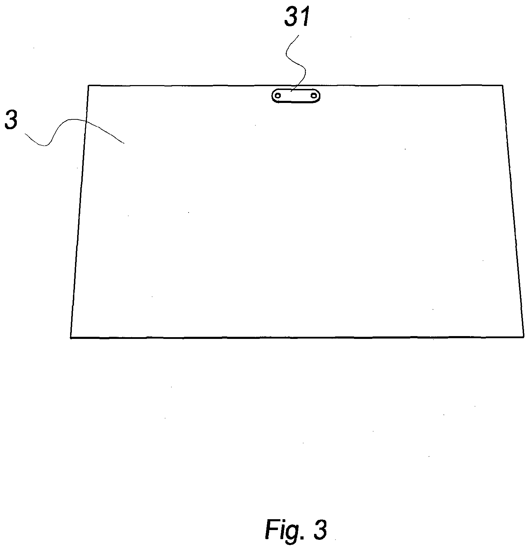

Figure 3 shows a view of the panel 3, particularly the rear surface thereof, having fixed thereto the first magnetic element 31, which cooperates with a corresponding second magnetic element located on the front edge 21.

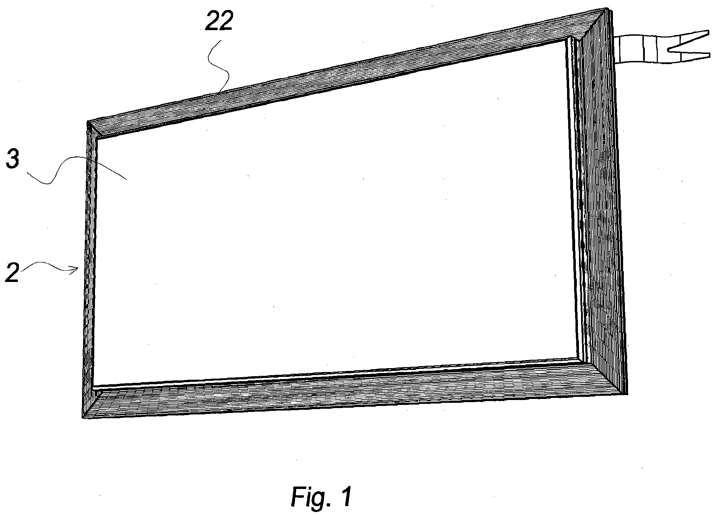

This arrangement allows concealment of the fastener members for fixing the panel 3 to the frame 2, when the panel is closed, as shown in Figure 1.

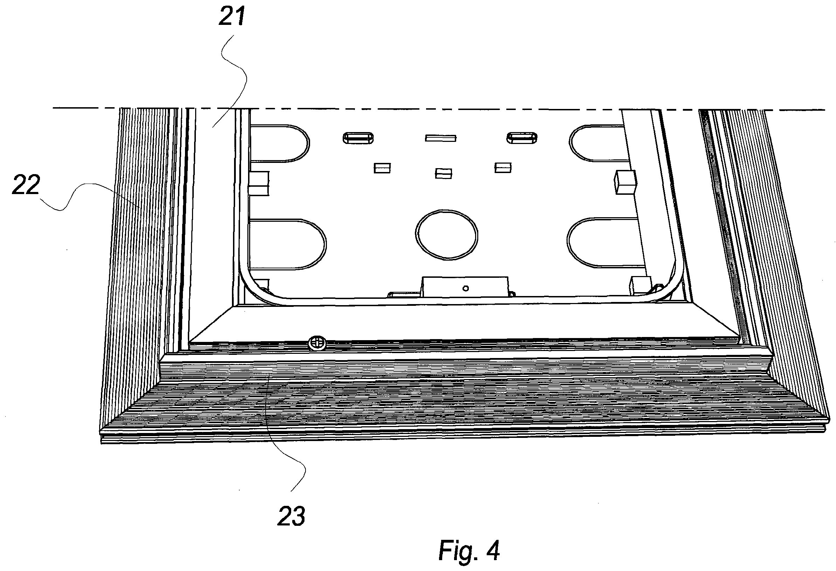

Particularly referring to the variant embodiments as shown in Figures 1 to 6 , each side of the peripheral flange 22 has a front abutment edge 21, such that each front abutment edge 21 is connected to a corresponding side of the peripheral flange 22 through a corresponding connecting rim 23, to form a step having a given thicknesses.

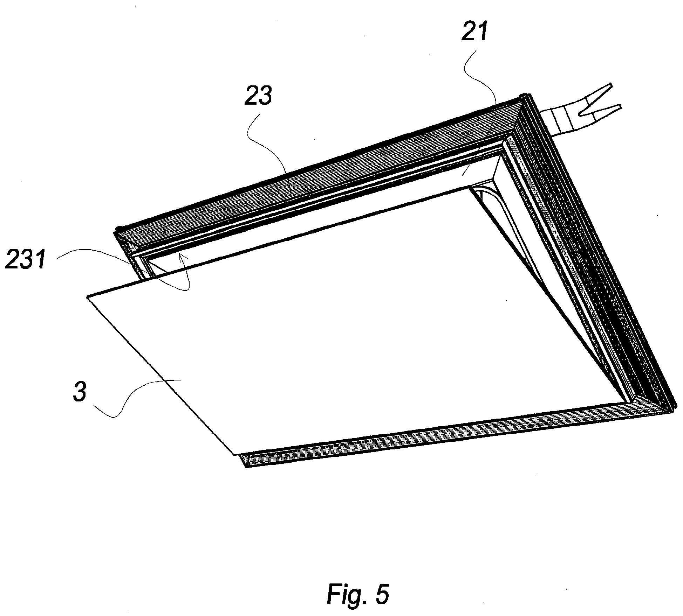

In a preferred embodiment, particularly referring to Figures 5 and 6 , the connecting rim 23 advantageously extends substantially perpendicular to the wall beyond the plane of the front abutment edge 21, thereby forming a connecting tab 231 between the peripheral flange 22 and the front abutment edge 21.

The connecting tab 231 projects out of the plane of the front abutment edge 21 by a length that corresponds to or is slightly greater than the thickness of the panel 3.

The connecting tab 231, as clearly shown in Figures 5 and 6, accomplishes a critical task during removal of the panel 3.

This is a dual task: referring to Figures 3 and 5 , since the first magnetic element 31 is placed in the higher portion of the panel 3, a pressure greater than the magnetic force should be exerted at a point of the panel far from the point at which the magnetic element 31 is fixed, to remove the panel.

The magnetic element 31 forms a thickness between the panel 3 and the front abutment edge 21, and by exerting a pressure on a point of the panel 3 far from the magnetic element 31, the panel 3 is caused to move toward the front edge 21 and since the panel 3 is made of a rigid, non-deformable material, the magnetic element 31 is caused to be pulled out of the front edge 21, thereby removing the panel 3.

In this case, the connecting tab 231 both supports the panel 3 during removal to prevent it from falling and facilitates its pivotal motion 3 for removal thereof.

According to a variant embodiment, the frame 2 is made of one piece and from a metal material.

As shown in the figures, the use of a metal material allows the front abutment edge 21 to incorporate the magnetic element that cooperates with the magnetic element 31 located on the panel.

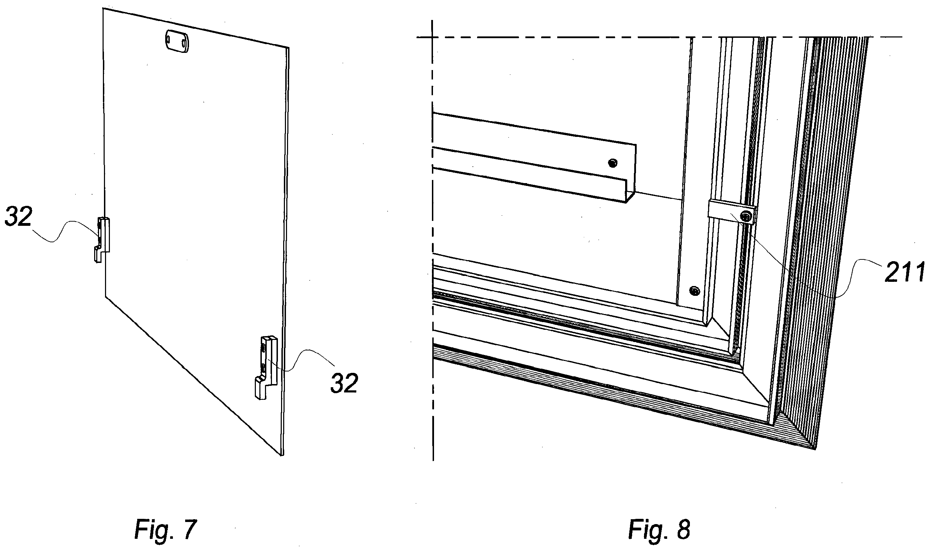

Figures 7 to 9 show an embodiment of the device of the present invention, which particularly but without limitation addresses devices with large panels.

In this embodiment, removable hinge means are provided for removably hinging the panel 3 to the frame 2, such that the panel 3 can pivot about at least one axis parallel to the wall.

Particularly, the hinge means may consist of a fastener element 32 located on the panel 3, which cooperates with a corresponding fastener seat located on the frame 2.

Particularly referring to Figures 7 and 8 , the fastener element 32 is an element with a hook-like end, which is designed to engage a stop member 211 arranged transverse to a groove formed on the front abutment edge 21.

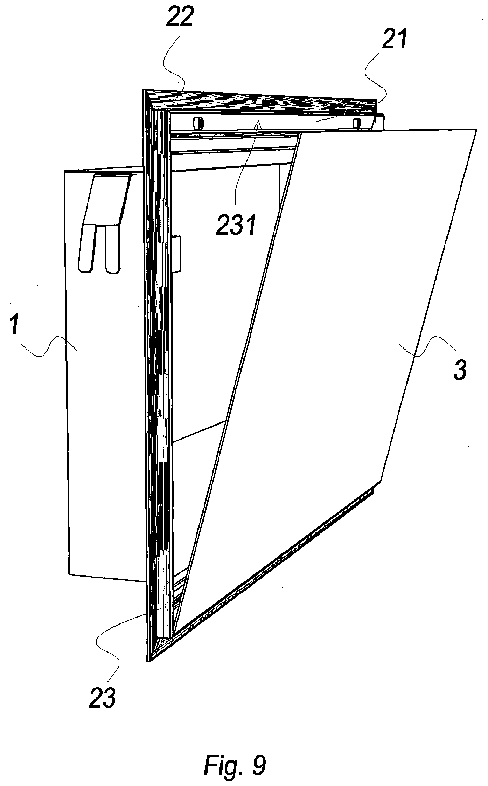

Figure 9 shows the panel 3 pulled out, with the magnetic element 31 pulled out of the front edge 21, and with the fastener element 32 engaged in the corresponding seat 211.

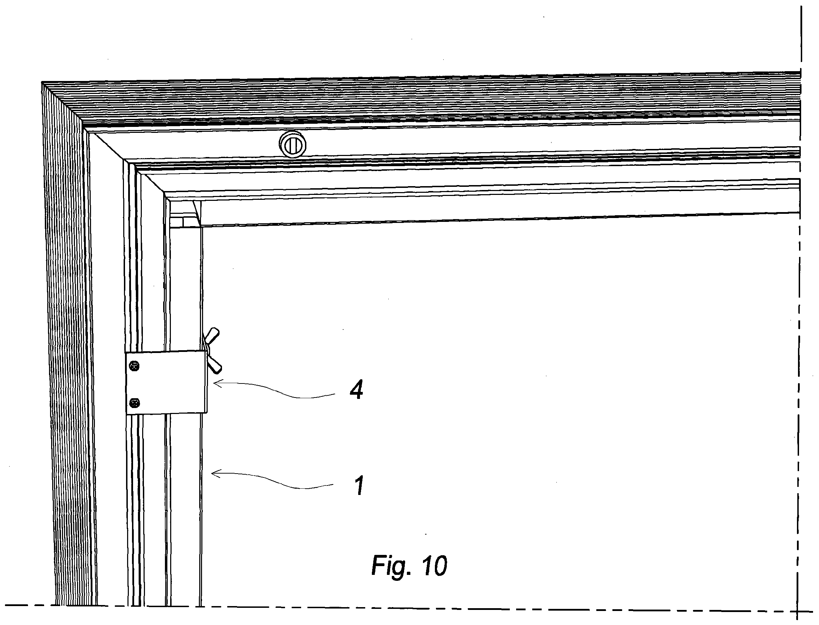

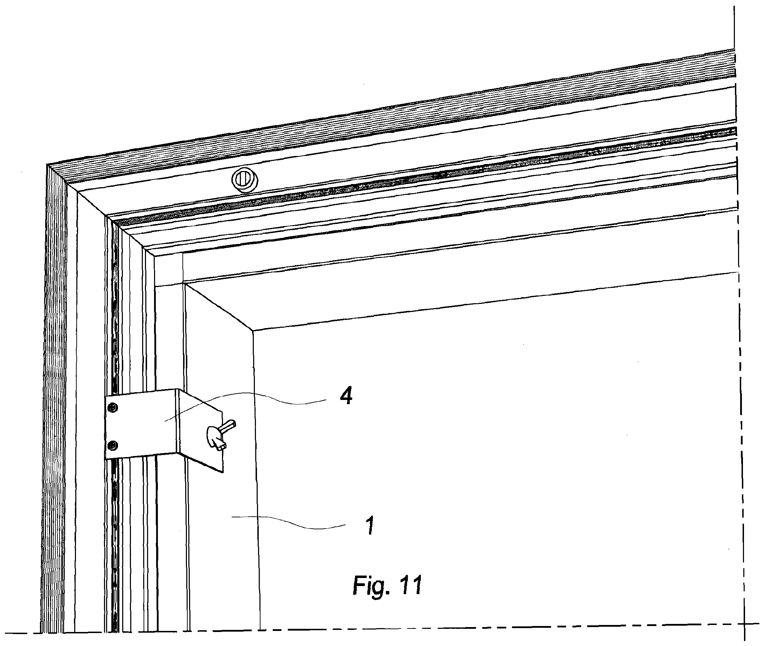

Figures 10 and 11 show two details of the kit for closing electrical service boxes arranged in houses and/or buildings with the purpose of accommodating electrical cables, pipes or the like.

As described above, electrical service boxes consist of a box-like body 1 to be embedded in the thickness of the wall, which has an open side along a plane substantially parallel to the wall.

The kit comprises closure means that are designed to be fixed to the box-like body 1 and fastener members 4 for removably fixing them to the box-like body 1.

The closure means may be designed to include one or more of the above described features as shown in Figures 1 to 9, and are preferably fixed at or along the perimeter edge that delimits the open side of the box-like body 1.

Figures 10 and 11 show a possible embodiment of the fastener members 4, which are angle elements having a part attached to the inner walls of the box-like body 1 and the other part attached to the front edge 21 of the frame 2.

Any prior art arrangement may be provided for the fastener members 4, and for example, in Figure 2, the frame 2 is fixed to the perimeter edge of the open side of the box-like body by means of screws 41.

The above described advantages of the kit of the present invention shall not be limited by the various possible embodiments of the frame, which are intended to be part of the contents of the present patent application.

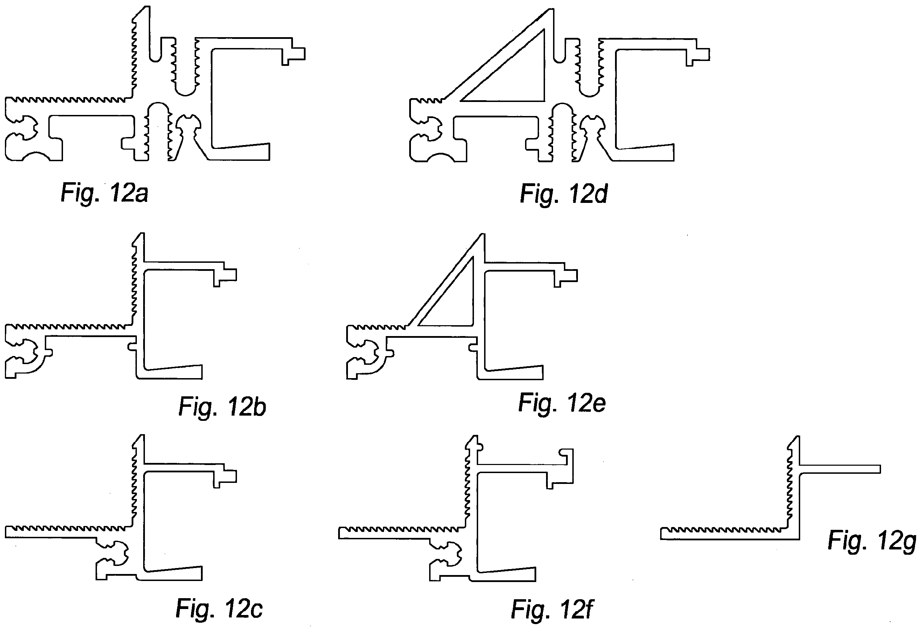

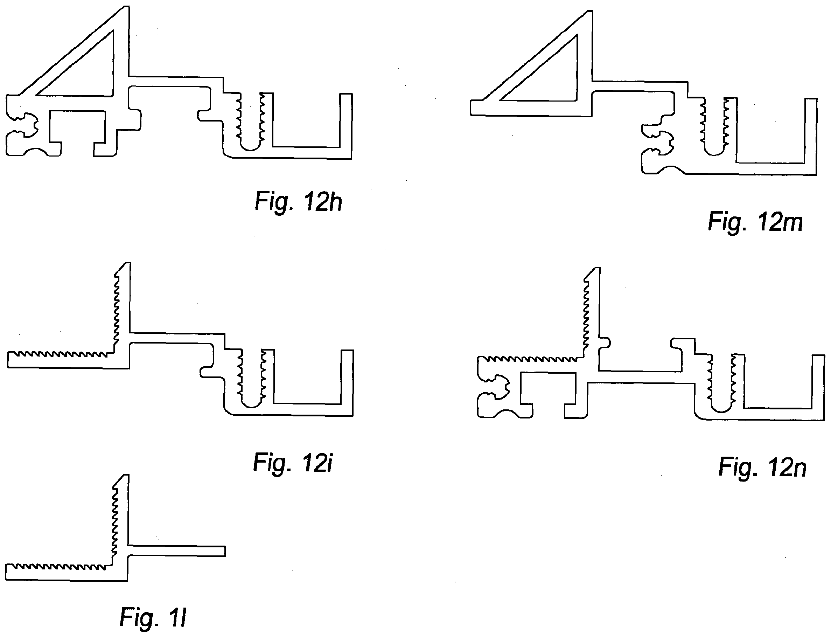

For example, the frame may be provided in any form, and particularly Figures 12a to 12n show different embodiments of the sectional profile of the frame 2 in a plane perpendicular to the panel 3.

Finally, in the light of the characteristics of the kit of the present invention, the frame 2 may have any shape, according to the shape of the box with which the frame 2 is designed to cooperate.

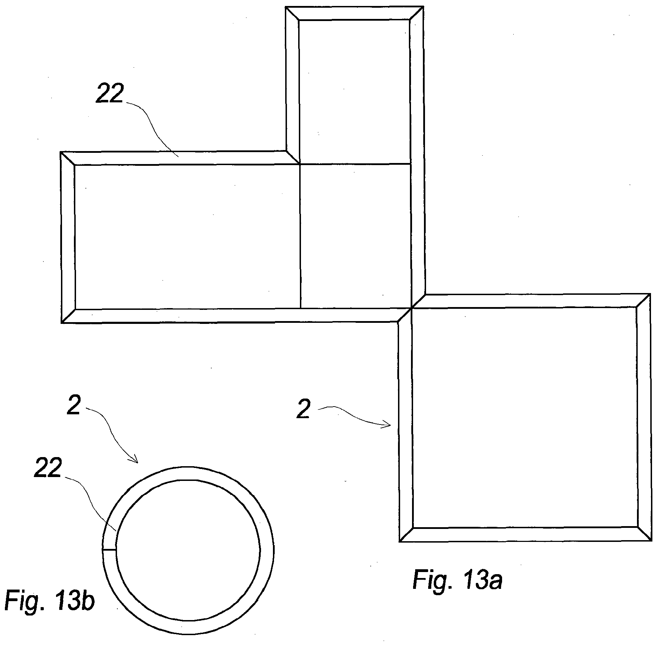

For example, the frame 2 may be designed to contain one or more boxes of various sizes, and be able to fit various desired shapes, as shown in Figure 13a , where the frame 2 contains four different boxes of different shapes, or in Figure 13b , where the box has a circular shape.

The frame of Figure 13a clearly shows that a single frame allows multiple boxes to be covered with the same panel, or multiple separated boxes to be covered with the same panel, with a gap or a beam therebetween.

## Claims

1. A device for closing electrical or plumbing service boxes arranged in houses and/or buildings with the purpose of accommodating electrical cables, pipes or the like, which comprises a box-like body (1) to be embedded in the thickness of the wall and closure means adapted to be fixed to said box-like body (1),
said box-like body (1) having at least one open side along a plane substantially parallel to the wall,
said closure means being fixed along the perimeter edge that delimits said open side of the box-like body (1),
said closure means consisting of a frame (2) that can be removably fixed to said box-like body (1) and a closure panel (3),
said frame (2) having a radially inward area of a given width along at least one of its sides, which is adapted to form a front abutment edge (21) for the panel (3), said front abutment edge (21) having fastener members for removable fixation of said panel (3),
**characterized in that**
said frame (2) consists of a peripheral flange (22) embedded in the wall, said peripheral flange (22) having said front abutment edge (21) on at least one of its sides, said peripheral flange (22) being connected to said front abutment edge (21) by means of a connecting rim (23) thereby forming a step connection area of given thickness,
said connecting rim (23) extending substantially perpendicular to the wall beyond the plane of said front abutment edge (21), thereby forming a connecting tab (231) between said peripheral flange (22) and said front abutment edge (21), which connecting tab (231) projects out of the plane of said front abutment edge (21) by a length corresponding to or slightly greater than the thickness of said panel (3).

2. A device as claimed in claim 1, wherein said fastening members are magnetic fastener means, consisting of a first magnetic element located on said panel (3), which first magnetic element cooperates with a second magnetic element located on said front abutment edge (21).

3. A device as claimed in claim 1, wherein each side of said peripheral flange (22) has a front abutment edge (21), such that each front abutment edge (21) is connected to a corresponding side of said peripheral flange (22) through a corresponding connecting rim (23), to form a step having a given thicknesses.

4. A device as claimed in one or more of the preceding claims, wherein said frame (2) is made of one piece and from a metal material.

5. A device as claimed in one or more of the preceding claims, wherein removable hinge means are provided for removably hinging said panel (3) to said frame (2), such that said panel (3) can pivot about at least one axis parallel to said wall.

6. A device as claimed in claim 5, wherein said hinge means consist of a fastener element (32) located on said panel (3), which cooperates with a corresponding fastener seat (211) located on the frame (2).

7. A kit for closing electrical service boxes arranged in houses and/or buildings for accommodation of electrical cables, pipes or the like, said electrical service boxes consisting of a box-like body (1) to be embedded in the thickness of the wall,
said box-like body (1) having at least one open side along a plane substantially parallel to the wall,
said kit comprising closure means adapted to be fixed to said box-like body (1),
fastener members (4) for removably fixing said closure means to said box-like body (1),
said closure means being fixed along the perimeter edge that delimits said open side of the box-like body (1)
**characterized in that**
said closure means consists of a frame (2) that can be removably fixed to said box-like body (1) and a closure panel (3),
said frame (2) having a radially inward area of a given width along at least one of its sides, which is adapted to form a front abutment edge (21) for the panel (3), said front abutment edge (21) having fastener members for removable fixation of said panel (3),
said frame (2) consisting of a peripheral flange (22) embedded in the wall, said peripheral flange (22) having said front abutment edge (21) on at least one of its sides, said peripheral flange (22) being connected to said front abutment edge (21) by means of a connecting rim (23) thereby forming a step connection area of given thickness,
said connecting rim (23) extending substantially perpendicular to the wall beyond the plane of said front abutment edge (21), thereby forming a connecting tab (231) between said peripheral flange (22) and said front abutment edge (21), which connecting tab (231) projects out of the plane of said front abutment edge (21) by a length corresponding to or slightly greater than the thickness of said panel (3).

8. A kit as claimed in claim 7, wherein said bags (1) are as claimed in one or more of claims 1 to 6.

## Patentansprüche

1. Vorrichtung zum Schließen elektrischen oder sanitären Dienstkästen, die in Häusern und/oder Gebäuden angeordnet sind, um elektrische Kabel, Rohre oder dergleichen aufzunehmen, wobei die Vorrichtung einen kastenartigen Körper (1) umfasst, der ausgebildet ist, um im Dickenmaß der Wand eingebettet zu werden, und Schließmittel aufweist, die geeignet sind, um an diesen kastenartigen Körper (1) befestigt zu werden,
wobei der kastenartige Körper (1) zumindest eine offene Seite entlang einer Ebene im wesentlichen parallel zu der Wand aufweist,
wobei die Schließmittel entlang der Umfangskante befestigt sind, welche die offene Seite des kastenartigen Körpers (1) begrenzt,
wobei die Schließmittel aus einem Rahmen (2), der an den kastenartigen Körper (1) entfembar befestigt werden kann, und einer Verschlussplatte (3) bestehen,
wobei der Rahmen (2) einen radial innenliegenden Bereich von gegebener Breite zumindest entlang einer seiner Seiten aufweist, welcher eine Stimstoßkante (21) für die Platte (3) bildet, wobei die Stimstoßkante (21) Befestigungsorgane zur entfernbare Befestigung der Platte (3) aufweist,
**dadurch gekennzeichnet, dass**
der Rahmen (2) aus einem in der Wand eingebetteten Umfangsflansch (22) besteht, wobei der Umfangsflansch (22) die Stimstoßkante (21) an zumindest einer seiner Seiten aufweist, wobei der Umfangsflansch (22) mit der Stimstoßkante (21) mittels einer Verbindungsleiste (23) verbunden ist und dabei einen gestuften Verbindungsbereich von gegebener Dicke ausformt,
die Verbindungsleiste (23) sich im wesentlichen senkrecht zur Wand über die Ebene der Stimstoßkante (21) erstreckt und dabei eine Verbindungslasche (231) zwischen dem Umfangsflansch (22) und der Stimstoßkante (21) bildet, wobei die Verbindungslasche (231) aus der Ebene der Stimstoßkante (21) mit einer Länge ausragt, die dem Dickenmaß der Platte (3) entspricht oder geringfügig größer als dieser Dickenmaß ist.

2. Vorrichtung nach Anspruch 1,
wobei die Befestigungsorgane magnetische Befestigungsmittel sind, die aus einem ersten auf der Platte (3) angeordneten magnetischen Element bestehen, wobei das erste magnetische Element mit einem zweiten auf der Stimstoßkante (21) angeordneten magnetischen Element zusammenarbeitet.

3. Vorrichtung nach Anspruch 1, wobei jede Seite des Umfangsflansches (22) eine Stimstoßkante (21) aufweist, so das jede Stimstoßkante (21) mit der entsprechenden Seite des Umfangsflansches (22) mittels eine entsprechende Verbindungsleiste (23) verbunden ist, um eine Stufe von gegebener Dicke zu bilden.

4. Vorrichtung nach einem oder mehr der vorhergehenden Ansprüche, wobei der Rahmen (2) einstückig und aus einem Metallwerkstoff gebildet ist.

5. Vorrichtung nach einem oder mehr der vorhergehenden Ansprüche, wobei abnehmbare Scharniermittel zum lösbaren Einhängen der Platte (3) an den Rahmen (2) vorgesehen sind, so dass die Platte (3) zumindest um eine zur Wand parallelen Achse schwenkbar ist.

6. Vorrichtung nach Anspmch 5, wobei die Scharniermittel aus einem an der Platte (3) angeordneten Befestigungselement (32) bestehen, welches mit einem entsprechenden an den Rahmen (2) angeordneten Befestigungssitz (211) zusammenarbeitet.

7. Bausatz zum Schließen von elektrischen Dienstkästen, die in Häusern und/oder Gebäuden angeordnet sind, um elektrische Kabel, Rohre oder dergleichen aufzunehmen,
wobei die elektrischen Dienstkästen aus einem kastenartigen Körper (1) bestehen, der ausgebildet ist, um im Dickenmaß der Wand eingebettet zu werden,
und der kastenartige Körper (1) zumindest eine offene Seite entlang einer Ebene im wesentlichen parallel zu der Wand aufweist, wobei der Bausatz Schließmittel umfasst, die geeignet sind, um an den kastenartigen Körper (1) befestigt zu werden, und
Befestigungsorgane (4) zur lösbare Befestigung der Schließmittel an den kastenartigen Körper (1),
wobei die Schließmittel entlang der Umfangskante befestigt sind, welche die offene Seite des kastenartigen Körpers (1) begrenzt,
**dadurch gekennzeichnet, dass**
die Schließmittel aus einem Rahmen (2), der an den kastenartigen Körper (1) entfembar befestigt werden kann, und einer Verschlussplatte (3) bestehen,
wobei der Rahmen (2) einen radial innenliegenden Bereich von gegebener Breite zumindest entlang einer seiner Seiten aufweist, welcher eine Stimstoßkante (21) für die Platte (3) bildet, wobei die Stimstoßkante (21) Befestigungsorgane zur entfernbare Befestigung der Platte (3) aufweist,
der Rahmen (2) aus einem in der Wand eingebetteten Umfangsflansch (22) besteht, wobei der Umfangsflansch (22) die Stimstoßkante (21) an zumindest einer seiner Seiten aufweist, wobei der Umfangsflansch (22) mit der Stimstoßkante (21) mittels einer Verbindungsleiste (23) verbunden ist und dabei einen gestuften Verbindungsbereich von gegebener Dicke ausformt,
die Verbindungsleiste (23) sich im wesentlichen senkrecht zur Wand über die Ebene der Stimstoßkante (21) erstreckt und dabei eine Verbindungslasche (231) zwischen dem Umfangsflansch (22) und der Stimstoßkante (21) bildet, wobei die Verbindungslasche (231) aus der Ebene der Stimstoßkante (21) mit einer Länge ausragt, die dem Dickenmaß der Platte (3) entspricht oder geringfügig größer als dieser Dickenmaß ist.

8. Bausatz nach Anspruch 7, **gekennzeichnet durch** Taschen (1) wie in einem oder mehreren der Ansprüche 1 bis 6 beanspmcht.

## Revendications

1. Dispositif pour fermer des boites de service électriques ou de plomberie placées à l'intérieur de maisons et/ou bâtiments pour y loger des câbles électriques, des tuyaux ou similaires, comprenant un corps en forme de boîte (1) à encastrer dans l'épaisseur de la paroi, et des moyens de fermetures pouvant être fixés audit corps en forme de boîte (1),
ledit corps en forme de boîte (1) ayant au moins un côté ouvert le long d'un plan sensiblement parallèle à la paroi,
lesdits moyens de fermeture étant fixés le long du pourtour délimitant ledit côté ouvert du corps en forme de boîte,
lesdits moyens de fermeture étant constitués d'un cadre (2) pouvant être fixé de façon amovible audit corps en forme de boîte (1) et un panneau de fermeture (3),
ledit cadre (2) comportant une zone radialement intérieure d'une largeur donnée au moins le long d'un de ses côtés, qui est propre à former un bord de butée avant (21) pour le panneau (3), ledit bord de butée avant (21) comportant des organes de fixation pour la fixation amovible dudit panneau (3),
**caractérisé en ce que**
ledit cadre (2) est constitué d'une bride périphérique (22) encastrée dans la paroi, ladite bride périphérique (22) étant pourvue dudit bord de butée avant (21) sur au moins un de ses côtés, ladite bride périphérique (22) étant reliée audit bord de butée avant (21) au moyen d'un bord de raccordement (23) formant une zone de raccordement à gradin d'une épaisseur donnée,
ledit bord de raccordement (23) s'étendant sensiblement perpendiculairement à la paroi au-delà du plan dudit bord de butée avant (21), et formant ainsi une ailette de raccordement (231) entre ladite bride périphérique (22) et ledit bord de butée avant (21), ladite ailette de raccordement (231) faisant saillie du plan dudit bord de butée avant (21) sur une longueur correspondante ou légèrement supérieure à l'épaisseur dudit panneau (3) .

2. Dispositif selon la revendication 1, dans lequel lesdits organes de fixation sont des organes de fixation magnétiques, constitués d'un premier élément magnétique situé sur ledit panneau (3), ledit premier élément magnétique coopérant avec un second élément magnétique situé sur ledit bord de butée avant (21).

3. Dispositif selon la revendication 1, dans lequel chaque côté de ladite bride périphérique (22) est pourvu d'un bord de butée avant (21) de manière que chaque bord de butée avant (21) soit relié à un côté correspondant de ladite bride périphérique (22) par un bord de raccord correspondant (21), pour former un gradin d'une épaisseur donnée.

4. Dispositif selon une ou plusieurs des revendications précédentes, dans lequel ledit cadre (2) est formé d'un seul tenant en métal.

5. Dispositif selon une ou plusieurs des revendications précédentes, dans lequel des moyens charnière amovibles sont mis en œuvre pour articuler de façon amovible ledit panneau (3) audit cadre (2), pour que ledit panneau (3) puisse pivoter autour d'au moins une axe parallèle à ladite paroi.

6. Dispositif selon la revendication 5, dans lequel lesdits moyens charnière sont constitués d'un élément de fixation (32) situé sur ledit panneau (3), et coopérant avec un correspondant logement de fixation (211) situé sur le cadre.

7. Kit pour fermer des boîtes de service électriques et de plomberie placées à l'intérieur de maisons et/ou bâtiments pour y loger des câbles électriques, des tuyaux ou similaires, lesdites boîtes de service électriques étant constituées d'un corps en forme de boîte (1) à encastrer dans l'épaisseur de la paroi,
ledit corps en forme de boîte (1) ayant au moins un côté ouvert le long d'un plan sensiblement parallèle à la paroi,
ledit kit comprenant des moyens de fermeture propres à être fixés audit corps en forme de boîte (1),
des organes de fixation (4) pour fixer de façon amovible lesdits moyens de fermeture audit corps en forme de boîte (1),
lesdits moyens de fermeture étant fixés le long du pourtour délimitant ledit côté ouvert du corps en forme de boîte (1),
**caractérisé en ce que**
lesdits moyens de fermeture sont constitués d'un cadre (2) pouvant être fixé de façon amovible audit corps en forme de boîte (1) et un panneau de fermeture (3),
ledit cadre (2) comportant une zone radialement intérieure d'une largeur donnée au moins le long d'un de ses côtés, qui est propre à former un bord de butée avant (21) pour le panneau (3), ledit bord de butée avant (21) comportant des organes de fixation pour la fixation amovible dudit panneau (3),
ledit cadre (2) étant constitué d'une bride périphérique (22) encastrée dans la paroi, ladite bride périphérique (22) étant pourvue dudit bord de butée avant (21) sur au moins un de ses côtés, ladite bride périphérique (22) étant reliée audit bord de butée avant (21) au moyen d'un bord de raccordement (23) formant une zone de raccordement à gradin d'une épaisseur donnée,
ledit bord de raccordement (23) s'étendant sensiblement perpendiculairement à la paroi au-delà du plan dudit bord de butée avant (21), et formant ainsi une ailette de raccordement (231) entre ladite bride périphérique (22) et ledit bord de butée avant (21), ladite ailette de raccordement (231) faisant saillie du plan dudit bord de butée avant (21) sur une longueur correspondante ou légèrement supérieure à l'épaisseur dudit panneau (3) .

8. Kit selon la revendication 6, dans lequel lesdites boîtes (1) sont selon une ou plusieurs des revendications 1 à 6.
